# EUROPÄISCHE PATENTANMELDUNG

(11) **EP 4 005 660 A1**
(43) Veröffentlichungstag der Anmeldung: **01.06.2022**
(21) Anmeldenummer: 20209844.8
(22) Anmeldetag: 25.11.2020
(51) Int. Cl.: B01F 7/08, B01F 3/12, B01F 15/02, C09B 67/00, B29C 48/40, B29C 48/285, B29C 48/505, B29C 48/625

(54) **VORRICHTUNG UND VERFAHREN ZUR HERSTELLUNG EINER PIGMENT- UND/ODER FÜLLSTOFFDISPERSION**

(71) Anmelder: DAW SE, 64372 Ober-Ramstadt (DE)
(72) Erfinder: RÖBER, Friedhelm, 04668 Grimma (DE); HÜBNER, Matthias, 04416 Markkleeberg (DE); MÜLLER, Constanze, 04451 Borsdorf (DE); SKWIERAWSKI, Patrick, 04451 Panitzsch (DE)
(74) Vertreter: Metten, Karl-Heinz

(57) **Zusammenfassung**

Die vorliegende Erfindung betrifft eine Vorrichtung 1 zur Herstellung einer Pigment- oder Füllstoffdispersion, umfassend einen Doppelschneckenextruder 2 mit einem L/D-Verhältnis von 25:1 bis 70:1, sowie eine am Anfangsbereich 20 an den Doppelschneckenextruder angeschlossene Feststoffzuführung 21, 22 und eine an diesem Anfangsbereich angeschlossene Flüssigkeitszuführung 23, 25, wobei mindestens zwei dispersiv mischende Knetzonen 40 bis 95 %, mindestens zwei Förderzonen 5 bis 60 % und mindestens eine distributiv mischende Rührzone 0 bis 15 % der Länge L des Doppelschneckenextruders ausmachen. Ferner betrifft die Erfindung ein Verfahren zum Herstellen einer Pigment- oder Füllstoffdispersion, umfassend das Einführen von Dispergieradditiven, Pigment- und/oder Füllstoffkomponenten und Flüssigkomponenten in einen Doppelschneckenextruder 2, wobei das Dispergieradditiv und die Flüssigkomponente förderstromaufwärts oder förderstromabwärts zu der Pigment- und/oder Füllstoffkomponente im Bereich einer Förderzone eingeführt werden; sowie das Vermengen des Dispergieradditivs, der Pigment- und/oder Füllstoffkomponente und der Flüssigkomponente in mindestens einer dispersiv mischenden Knetzone förderstromabwärts der Förderzone unter Ausbildung und Förderung einer Pigment- und/oder Füllstoffdispersion. Außerdem betrifft die Erfindung die Verwendung der erfindungsgemäßen Vorrichtung 1 für die Herstellung einer Pigment- und/oder Füllstoffdispersion.

## Beschreibung

Die vorliegende Erfindung betrifft eine Vorrichtung zum Herstellen einer Pigment- und/oder Füllstoffdispersion. Ferner betrifft die Erfindung ein Verfahren zum Herstellen einer Pigment- und/oder Füllstoffdispersion.

Bei der Herstellung von Pigment- und/oder Füllstoffdispersionen, wie Dispersionsfarben, Farb- oder Füllstoffpasten oder lösungsmittelhaltigen oder wässrigen Lacken, ist es üblich, Beschichtungsmassen oder deren Vorstufen in einem sogenannten Batch-Prozess zu produzieren. Diese Beschichtungsmassen und deren Vorstufen können dabei in Batch-Volumina von mehreren 100 kg bis zu mehreren Tonnen erzeugt werden. Die bei diesen Batchprozessen erhaltenen Produkte werden im Allgemeinen nach Beendigung des Verfahrens portioniert in Behälter abgefüllt, die zum weiteren Vertrieb vorgesehen sind, beispielsweise in Form von Stahlfässern, Kunststoffgebinden oder dergleichen. Konventionelle Batch-Prozesse erfordern eine Fertigungsdurchlaufzeit von mehreren Tagen. Die lange Fertigungsdurchlaufzeit wird einerseits bedingt durch die Zeitabhängigkeit von Dispersionsmischverfahren und andererseits durch die in vielen Fällen erforderliche Reifezeit zur Benetzung beziehungsweise zum Aufschließen von agglomerierten Dispersionsbestandteilen. Je nach Farbtonwunsch können die Produkte direkt koloriert oder mit vorgefertigten Weiß-, Bunt- oder Transparentbasen vermengt werden. Sie können auch, üblicherweise bereits in einem Transportgebinde vorliegend, mit einer oder mehreren Farbpasten koloriert werden.

Als Weiterentwicklung des Batch-Prozesses beschreibt DE 10 2014 210 228 B4 ein Verfahren zur Herstellung einer Dispersionsfarbe aus einem beispielsweise pulverförmigen Rohstoff und einer Flüssigkeit, wie Wasser oder einem Verdünnungsmittel. Das beschriebene Verfahren soll sich vor allem zur Herstellung kleiner Mengen von Farbmischungen eignen. Dazu werden der Rohstoff und die Flüssigkeit zunächst in jeweils einem separaten Behälter bereitgestellt und daraus gleichzeitig kontinuierlich in eine Mischkammer geführt. Der Flüssigkeit können vor der Zuführung in die Mischkammer oder direkt in die Mischkammer ein Bindemittel oder Additive hinzugefügt werden, um die Qualität und Zusammensetzung der Farbe einzustellen. In der Mischkammer können gegenläufig angetriebene gezahnte Scheiben vorgesehen sein. In vermischtem Zustand werden der Rohstoff und die Flüssigkeit als Mischung, die die hergestellte Dispersionsfarbe bildet, kontinuierlich aus der Mischkammer herausgeführt. Danach kann eine Homogenisierung der Mischung erfolgen und es können weiteres Bindemittel und Additive hinzugefügt werden. Im Anschluss an das Mischen in der Mischkammer ist ein Reifeprozess vorgesehen. Die Homogenisierung und Reifung erfordern eine lange Zeit, und die Herstellung kleiner Farbmengen einen signifikant erhöhten logistischen Aufwand, sodass der beschriebene Quasi-Batch-Prozess gegenüber dem konventionellen Batch-Prozess keinen ökonomischen Vorteil bietet.

Die Herstellung geringer Mengen von Tintenmischungen in kontinuierlichen Mischprozessen ist aus der Herstellung von Masterbatches, für Druckfarben oder ähnliches bekannt.

Beispielsweise beschreibt US 2006/0037517 A1 ein Verfahren zum Herstellen einer organischen Pigmentdispersion, wie eine Tinte, in einem Doppelschneckenextruder. Dazu wird zunächst eine wässrige Pigmentdispersion, ein organisches Medium und ein destabilisierender Wirkstoff eingespeist und anschließend die Wasserphase zumindest teilweise entfernt. Der Doppelschneckenextruder hat in einem ersten Bereich Schneckenelemente zum Vermischen des destabilisierten Pigments und des organischen Mediums zu einer Art rohem Presskuchen. In einer ersten Trommel sind in beliebiger Reihenfolge vier verschiedene Zuführungen zum Einführen einer vorbereiteten stabilen, wässrigen Pigmentdispersion, einem Alkyl, einem vorbereiteten Lack und einem sauren, destabilisierenden Wirkmittel vorgesehen. Ferner nimmt die erste Trommel Zuführschneckenelemente auf. Eine zweite Trommel enthält kombinierte Schneckenelemente zum Vermischen oder Kneten und zum Fördern. Hierbei können Temperaturen von nahezu 90 °C auftreten. Eine dritte Trommel enthält Misch- und Förder-Schneckenelemente mit hoher Scherwirkung. Die zweite Trommel und darauffolgende Trommeln können mit einem Ölmantel zum Temperieren auf etwa 60 °C ausgestattet sein. Der Doppelschneckenextruder wird mit 150 bis 550 U/min betrieben. Mit dem beschriebenen Verfahren können beispielsweise ein sogenanntes "geflushtes" Pigment, Toner oder ein Masterbatch hergestellt werden. Bei geflushten Pigmenten handelt es sich um Pigmente, die aus einer wässrigen Aufschwemmung ohne Zwischentrocknung ins ölige Bindemittel eingearbeitet werden. Derartige Verfahren werden verwendet für die Produktion von Heatsetdruckfarben.

Ein anderes Verfahren zum Herstellen eines sogenannten "geflushten" Pigments wird in US 2003/0 177 939 A1 beschrieben. Als Ausgangsstoff wird ein Presskuchen verwendet, der zunächst verflüssigt und homogenisiert wird. Der Presskuchen kann beispielsweise gebildet sein aus gelben Diarrylid-Pigmenten, Phthalocyan-Pigmenten, Calciumlitholrot, Alkaliblau, Bariumlitholrot, Rhodamingelb, Rhodaminblau, und so weiter. Der Presskuchen hat typischerweise einen Wasseranteil von etwa 12 % bis 45 %. Verarbeitet werden 30-35 lbs Presskuchen pro Stunde. Zur Verflüssigung wird der Presskuchen einer Scherung unterworfen, wobei ein Schneckenbandmischer, ein Paddelmischer, eine Förderschnecke oder ein Spiralmischer zum Einsatz kommen können. Der verflüssigte Presskuchen wird sodann zusammen mit einem flüssigen, hydrophoben organischen Medium in einen Doppelschneckenextruder geführt. Das organische Medium kann beispielsweise ein Lösungsmittel, einen Lack, ein Öl und/oder ein Harz umfassen. In einem ersten Bereich des Extruders werden der Presskuchen und das organische Medium gemischt, um das Pigment mit dem organischen Medium zu benetzen und um Wasser aus dem rohen Presskuchen zu verdrängen. Förderstromabwärts ist der Doppelschneckenextruder mit einem Wasser-Ablassventil und gegebenenfalls einer Vakuumpumpe versehen, um Wasser aus der Spülung zu entfernen.

Zum Herstellen einer elektrostatischen Tintenmischung beschreibt US 2015/0 129 811 A1 ein Verfahren, gemäß dem ein Harz mit einem leitfähigen Pigment in einem kontinuierlichen Mischer vermengt wird. Das leitfähige Pigment ist mit einem flüssigen Trägermedium wie Öl ausgestattet. Als kontinuierlicher Mischer wird ein Doppelschneckenextruder vorgeschlagen, der mit 200 bis 1000 U/min betrieben wird. Das Mischen kann bei einer Temperatur von 80 °C oder mehr erfolgen. Der Mischer hat eine hohe Scherwirkung, um die Größe der abgegebenen Partikel zu reduzieren. In dem Doppelschneckenextruder können der Mischung weiteres flüssiges Trägermedium hinzugefügt werden. Die Tintenmischung wird beim Mischen auf etwa 2 Gew.-% Feststoffanteil verdünnt. Vor der Abgabe kann die Tintenmischung durch ein 70 µm Netz gefiltert werden, um große Partikel und Agglomerate zu entfernen. Mit dem Verfahren können 3 bis 4 kg/h einer Tintenmischung erzeugt werden.

Es ist wünschenswert, eine Vorrichtung und eine Verformung zur Herstellung einer Pigment- und/oder Füllstoffdispersion, wie eine Dispersionsfarbe, Farb- oder Füllstoffpasten oder einen lösungsmittelhaltiger oder wässrigen Lack bereitzustellen, welches im Vergleich zu dem herkömmlichen Batch-Herstellungsverfahren bei zumindest gleichbleibender Qualität einen wenigstens gleich hohen oder höheren Durchsatz bereitstellen kann und bei dem vorzugsweise auf eine Nachreifung verzichtet werden kann.

Demgemäß ist eine Vorrichtung zur Herstellung einer Pigment- und/oder Füllstoffdispersion, wie eine Dispersionsfarbe, Farb- oder Füllstoffpaste oder ein lösungsmittelhaltiger oder wässriger Lack, vorgesehen, die wenigstens einen Doppelschneckenextruder umfasst, der einen Anfangsbereich und einen Endbereich, enthaltend eine Abgabeeinheit, hat. Der Doppelschneckenextruder kann ein gegenläufiger Doppelschneckenextruder oder ein gleichläufiger Doppelschneckenextruder sein, wobei im Sinne der Erfindung gleichläufige Doppelschneckenextruder bevorzugt sind. Bei der erfindungsgemäßen Vorrichtung hat der Doppelschneckenextruder eine Länge L vom Anfangs- bis zum Endbereich sowie einen Durchmesser D. Das L/D-Verhältnis liegt im Bereich von 25:1 bis 70:1, bevorzugt im Bereich von 35:1 bis 65:1 und besonders bevorzugt im Bereich von 40:1 bis 60:1. Die erfindungsgemäße Vorrichtung ist ausgelegt und eingerichtet zum kontinuierlichen Dispergieren wenigstens einer Pigmentkomponente und/oder wenigstens einer Füllstoffkomponente in Gegenwart wenigstens eines Dispergieradditivs und gegebenenfalls mindestens eines Rheologieadditivs unter Ausbildung und Förderung der Pigment- und/oder Füllstoffdispersion. Es sei klar, dass mit einem kontinuierlichen Dispergieren die Durchführung eines dispergierenden Mischens bezüglich wenigstens eines Teils einer kumulierten Förderrate der wenigstens einen Pigmentkomponente und/oder der wenigstens einen Füllstoffkomponente, und wenigstens eines Dispergieradditivs für einen zusammenhängenden Zeitraum von mehreren Minuten, vorzugsweise wenigstens einer Stunde, besonders bevorzugt mehreren Stunden beschreibt. Bei der erfindungsgemäßen Vorrichtung weist der Doppelschneckenextruder entlang der Länge L, in dieser Reihenfolge, mindestens eine erste Förderzone umfassend wenigstens ein Förderelement, mindestens eine erste dispersiv mischende Knetzone, umfassend mindestens ein dispersiv mischenden Knetelement, mindestens eine zweite Förderzone und mindestens ein zweites dispersiv mischendes Knetzone sowie gegebenenfalls mindestens eine distributiv mischende Rührzone, umfassend wenigstens ein distributiv mischendes Element, auf. Eine dispersiv mischende Knetzone kann beispielsweise durch ein Knetelement oder mehrere Knetelemente eines Doppelschneckenextruders gebildet sein. Eine dispersiv mischende Knetzone kann beispielsweise dazu ausgelegt und eingerichtet sein, untereinander nicht verträgliche Stoffe miteinander zu mischen, und/oder um Agglomerate zu zerteilen und/oder fein zu verteilen. Ein distributiv mischendes Element kann beispielsweise durch eine Rührelement oder Mischelement eines Doppelschneckenextruders realisiert sein. Eine Förderzone kann vorzugsweise durch eine oder mehrere Förderelemente, insbesondere archimedische Schrauben, des Doppelschneckenextruders gebildet sein. Bevorzugt weist der Doppelschneckenextruder zwei gegeneinander drehende Extruderschnecken auf. Alternativ kann der Doppelschneckenextruder zwei gleichsinnige drehende Extruderschnecken aufweisen.

Bei der erfindungsgemäßen Vorrichtung machen die mindestens zwei dispersiv mischende Knetzonen 40 % bis 95 %, bevorzugt 45 % bis 75 %, der Länge L des Doppelschneckenextruders aus. Die mindestens zwei Förderzonen machen mindestens 5 % bis 60 %, bevorzugt 25 % bis 55 %, der Länge L des Doppelschneckenextruders aus. Bei einem Doppelschneckenextruder ohne distributiv mischendes Element macht dieses 0 % der Länge L aus. Sofern der Doppelschneckenextruder mit wenigstens einem distributiv mischenden Element ausgeführt ist, macht die distributiv mischende Rührzone mehr als 0 % bis zu 15 %, bevorzugt 5 % bis 10 %, der Länge L des Doppelschneckenextruders aus. Es kann eine distributiv mischende Rührzone vorgesehen sein, die ein oder mehreren distributiv mischenden Elementen umfasst. Es sei klar, dass die kumulierten Anteile der mindestens zwei Förderzonen und der mindestens zwei dispersiv mischenden Knetzonen sowie gegebenenfalls des mindestens einen distributiv mischenden Elements stets nicht mehr als 100 % der Länge L des Doppelschneckenextruders ergeben. Es kann bevorzugt sein, dass eine Förderzone aus Förderelementen besteht, dass eine dispergierend mischende Knetzone aus dispersiv mischenden Knetelementen besteht, und/oder dass eine distributiv mischende Rührzone aus distributiv mischenden Elementen besteht.

Die erfindungsgemäße Vorrichtung umfasst ferner wenigstens eine am oder benachbart zum Anfangsbereich an den Doppelschneckenextruder, insbesondere im Bereich einer vorzugsweise ersten oder zweiten Förderzone, angeschlossene oder abschließbare Feststoffzuführung zum Zuführen mindestens einer Feststoffkomponente in den Doppelschneckenextruder. Vorzugsweise kann die wenigstens eine Pigmentkomponente und/oder die wenigstens eine Füllstoffkomponente als Feststoffkomponente vorgesehen sein. Die Vorrichtung umfasst außerdem wenigstens eine am oder benachbart zum Anfangsbereich und insbesondere benachbart zu der Feststoffzuführung, vorzugsweise förderstromaufwärts oder förderstromabwärts in Bezug zu der Feststoffzuführung, angeschlossene oder an schließbar Flüssigkeitszuführung zum Zuführen mindestens einer Flüssigkomponente in den Doppelschneckenextruder. Die mindestens eine Flüssigkomponente umfasst vorzugsweise ein organisches Lösungsmittel und/oder Wasser. Die mindestens eine Flüssigkomponente umfasst vorzugsweise das mindestens eine Dispergieradditiv. Soweit im Rahmen der vorliegenden Offenbarung von einer Flüssigkomponente und einem Dispergieradditiv in Kombination die Rede ist, sei klar, dass eine Flüssigkomponentenmischung umfassend wenigstens ein Dispergieradditiv und wenigstens eine andere Flüssigkomponente gemeint ist.

Die Füllstoffkomponente kann z.B. ausgewählt werden aus der Gruppe bestehend aus Silikaten, insbesondere Aluminiumsilikaten, z.B. Kaolin und/oder kalziniertes Kaolin, Carbonaten, Flussspat, Sulfaten, Oxiden und beliebigen Mischungen hiervon. Und die Pigmentkomponente kann insbesondere ausgewählt werden aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat sowie einer beliebigen Mischung hiervon.

Eine bevorzugte Ausführungsform ist dazu eingerichtet und ausgelegt für ein, insbesondere kontinuierliches, Dispergieren der wenigstens einen Pigmentkomponente und/oder der wenigstens einen Füllstoffkomponente in Gegenwart des wenigstens einen Dispergieradditivs und gegebenenfalls des mindestens einen Rheologieadditivs bei einer Schneckendrehzahl von wenigstens 750 U/min, bevorzugt wenigstens 1000 U/min, besonders bevorzugt im Bereich von 1000 U/min bis 1300 U/min und insbesondere im Bereich von 1100 bis 1400 U/min. Überraschenderweise hat sich gezeigt, dass eine hohe Schneckendrehzahl von wenigstens 750 U/min nicht abträglich ist hinsichtlich der Materialeigenschaften des durch die Vorrichtung ausgebildeten Pigment- und/oder Füllstoffdispersion. Vielmehr hat sich herausgestellt, dass mit einer hohen Schneckendrehzahl innerhalb von sehr kurzer Durchlaufzeit große Mengen einer Pigment- und/oder Füllstoffdispersion mit hervorragenden Eigenschaften erzeugt werden können, bei der insbesondere eine Partikelgröße von 50 µm oder mehr nicht überschritten wird.

Gemäß einer zweckmäßigen Ausführungsform sind entlang der Länge L des Doppelschneckenextruders mehrere Förderzonen und dispersiv mischende Knetzonen zumindest abschnittsweise alternierend vorgesehen. Der Doppelschneckenextruder kann wenigstens 3, wenigstens 5 oder wenigstens 10 Förderzonen und wenigstens 3, wenigstens 5 oder wenigstens 10 dispersiv mischende Knetzonen aufweisen, wobei je eine Förderzone und eine dispersiv mischende Knetzonen alternierend entlang der Länge des Doppelschneckenextruders vorgesehen sind.

Gemäß einer Ausführungsform einer erfindungsgemäßen Vorrichtung mündet die wenigsten eine Feststoffzuführung, insbesondere wenigsten zwei oder drei Feststoffzuführungen, in eine Förderzone oder eine dispersiv mischende Knetzone, insbesondere in eine Förderzone. Alternativ oder zusätzlich mündet die wenigstens eine Flüssigkeitszuführung, insbesondere wenigsten drei oder vier Flüssigkeitszuführungen, in eine Förderzone oder eine dispersiv mischende Knetzone, insbesondere in eine Förderzone, mündet, die insbesondere nicht mit der Förderzone oder der dispersiv mischenden Knetzone übereinstimmt, in das die wenigsten eine Feststoffzuführung mündet. Vorzugsweise können mehrere Feststoffzuführungen in dieselbe Förderzone oder dieselbe dispersiv mischende Knetzone münden. Vorzugsweise können mehrere Flüssigkeitszuführungen in dieselbe, insbesondere andere, Förderzone oder dieselbe, insbesondere andere dispersiv mischende Knetzone münden. Gemäß einer alternativen Ausführungsform kann es bevorzugt sein, dass wenigstens eine Flüssigkeitszuführung und wenigstens eine Feststoffzuführung in dieselbe Förderzone oder dieselbe dispersiv mischende Knetzone münden.

Gemäß einer erfindungsgemäßen Ausführungsform ist der Doppelschneckenextruder dazu ausgelegt und eingerichtet, am Endbereich, insbesondere über die Abgabeeinheit, insbesondere kontinuierlich, eine Pigment- und/oder Füllstoffdispersion mit einer Förderrate von wenigstens 100 kg/h oder wenigstens 150 kg/h, insbesondere wenigstens 200 kg/h, vorzugsweise wenigstens 500 kg/h, besonders bevorzugt wenigstens 1000 kg/h abzugeben und insbesondere einem Transportbehälter, wie einem Metallbehälter, z.B. Stahlfass, oder einem Kunststoffgebinde, zuzuführen. Ein derartiger Durchsatz liegt signifikant oberhalb der Möglichkeiten der Herstellung einem konventionellen herkömmlichen Batch-Prozess, bei gleichzeitig erheblich verringertem Handling-Aufwand. Unter einer Förderrate im Sinne der vorliegenden Erfindung wird demgemäß die Menge an Pigment- und/oder Füllstoff-dispersion, bestimmt in kg/h, verstanden, die der erfindungsgemäßen Vorrichtung als Produkt am Endbereich entnommen werden kann.

Bei einer Ausführungsform der Erfindung ist wenigstens eine benachbart zum Endbereich und vor mindestens einer dispersiv mischenden Knetzone an den Doppelschneckenextruder, insbesondere im Bereich einer Förderzone, angeschlossene oder anschließbare Feststoffzuführung zum Zuführen mindestens einer Feststoffkomponente in den Doppelschneckenextruder und/oder Flüssigkeitszuführung zum Zuführen mindestens einer Flüssigkomponente in den Doppelschneckenextruder vorgesehen. Mit einer Flüssig- oder Feststoff-Zuführung nahe dem Endbereich ist es möglich, im Endbereich des Herstellungsverfahrens der fast fertigen Pigment- und/oder Füllstoffdispersion Komponenten oder Additive, beispielsweise wenigstens eine Bindemittel, wenigstens ein Konservierungsmittel, wenigstens eine Dispergieradditiv und/oder eine Pigment- und/oder Füllstoffkomponente zuzuführen. Auf diese Weise können der Pigment- und/oder Füllstoffdispersion empfindliche Komponenten und/oder Additive beigemischt werden, oder Komponenten und/oder Additive zum regelnden beeinflussen der Komposition im Endbereich, insbesondere der Ausgabevorrichtung. Beispielsweise ermöglicht eine Flüssigkeitszuführung und/oder eine Feststoffzuführung nahe dem Endbereich des Doppelschneckenextruders, einen ausgleichenden Einfluss auf die Pigment- und/oder Füllstoffdispersion zu nehmen, falls an der Ausgabe erkennbar ist, dass sie droht, einen Toleranzband zu verlassen.

Gemäß einer zweckmäßigen Ausführungsform umfasst die erfindungsgemäße Vorrichtung im oder am Endbereich, insbesondere als Bestandteil der Abgabeeinheit, eine Pumpe zum Einstellen der Förderrate, wie eine Schmelzepumpe, beispielsweise eine Zahnradpumpe.

Die Schmelzepumpe kann dazu ausgelegt und eingerichtet sein, einen Druckaufbau im Doppelschneckenextruder einzustellen und/oder um eine schonende, effiziente und konstante Förderung durch das Abgabeende einzustellen. Die Verwendung einer Pumpe gestattet das kontinuierliche Dispergieren beizubehalten, während die Förderung zumindest zeitweise verringert oder zumindest zeitweise unterbunden werden kann, beispielsweise, um einen Transportbehälter, an den die Pigment- und/oder Füllstoffdispersion abgegeben wird, durch einen anderen Transportbehälter zu ersetzen, oder um eine geringe Menge der gebildeten Pigment- und/oder Füllstoffdispersion unabhängig von einer im Allgemeinen hohen Förderrate an der Abgabe der Vorrichtung aufzufangen, beispielsweise zur Qualitätsprüfung, insbesondere um regelnd auf die Vorrichtung einzuwirken.

Vorzugsweise umfasst die erfindungsgemäße Vorrichtung ein Sieb und/oder eine Perlmühle, dass Beziehung so sind die im oder am Endbereich der Vorrichtung angeordnet ist, insbesondere als Bestandteil der Abgabeeinheit oder hierauf folgend, das Beziehungsweise die ausgelegt und eingerichtet ist, um Partikelagglomerate der Pigment- und/oder Füllstoffkomponente einem Scherschritt zu unterwerfen. Das Sieb kann Teil eines Siebwechslers sein. Damit kann sichergestellt werden, dass nur hinreichend kleine Partikel in der ausgegebenen Pigment- und/oder Füllstoff-Dispersion enthalten sind, welche von der Vorrichtung abgegeben wird. Mit dem Sieb und/oder der Perlmühle kann gewährleistet sein, dass die Pigment- und/oder Füllstoffdispersion, die von der Vorrichtung abgegeben wird, Partikel mit einer Größe von nicht mehr als 100 µm, vorzugsweise nicht mehr als 50 µm, insbesondere nicht mehr als 30 µm aufweist. Die Partikelgröße kann beispielsweise definiert sein als Partikelgröße D50 gemäß DIN ESO 9276-1: 2004-0 0 (Darstellung der Ergebnisse von Partikelgrößenanalysen - Teil 1: grafische Darstellung) und ESO 9276-2: 2014, 05 (Darstellung der Ergebnisse von Partikelgrößeanalysen-Teil 2: Berechnung von mittleren Partikelgrößen/-Durchmessern und Momenten aus Partikelgrößeverteilungen). Für die Bestimmung eines D50-Werts kann auf einen sogenannten Laser Scattering Particle Size Distribution Analyser, wie von der Firma Horiba unter der Gerätebezeichnung "LA 950 V2" erhältlich, zurückgegriffen werden.

Alternativ oder zusätzlich weist die erfindungsgemäße Vorrichtung eine Messvorrichtung, wie eine Waage, zum Bestimmen der Menge an über die Abgabeeinheit, insbesondere in den Transportbehälter, abgegebene Pigment- und/oder Füllstoffdispersion, auf.

Gemäß einer Ausführungsform einer erfindungsgemäßen Vorrichtung umfasst die mindestens eine Feststoffzuführung eine, insbesondere gravimetrische oder volumetrische, Feststoffdosiervorrichtung zum, insbesondere kontinuierlichen, Zuführen einer Feststoffkomponente, wie der Pigment- und/oder Füllstoffkomponente, in den Doppelschneckenextruder. Durch Verwendung mindestens einer Feststoffdosiervorrichtung kann eine hohe Qualität der erzeugten Pigment- und/oder Füllstoffdispersion durch Einstellung eines korrekten Mischverhältnisses gewährleistet werden.

Zweckmäßig kann bei einer Ausführungsform der erfindungsgemäßen Vorrichtung wenigstens eine erste Feststoffzuführung im Bereich der ersten Förderzone angeschlossen oder anschließbar ist und dass wenigstens eine zweite Feststoffzuführung im Bereich der zweiten Förderzone angeschlossen oder anschließbar sein.

Ferner kann es zweckmäßig sein, dass die Vorrichtung gemäß einer Ausführungsform alternativ oder zusätzlich wenigstens eine, insbesondere gravimetrische oder volumetrische, Flüssigdosiervorrichtung zum, insbesondere kontinuierlichen, Zuführen mindestens einer Flüssigkomponente in den Doppelschneckenextruder umfasst. Durch Verwendung mindestens einer Flüssigdosiervorrichtung kann eine hohe Qualität der erzeugten Pigment- und/oder Füllstoffdispersion durch Einstellung eines korrekten Mischverhältnisses gewährleistet werden.

Bei einer Ausführungsform der erfindungsgemäßen Vorrichtung kann es bevorzugt sein, dass wenigstens eine erste Flüssigkeitszuführung an die erste Förderzone angeschlossen oder anschließbar ist, und wenigstens eine zweite Flüssigkeitszuführung angeschlossen oder anschließbar an die zweite Förderzone. Durch die Verwendung mehrerer Förderrichtung können verschiedene Dispergieradditive, Flüssigkomponenten o. ä. getrennt voneinander dem Doppelschneckenextruder zugeführt und gegebenenfalls einzelnen dosiert werden, insbesondere um eine gewünschtes Mischung Verhältnis präzise einzustellen und/oder um gezielt verschiedene Flüssigkomponenten, Dispergieradditive o. ä. an unterschiedlichen Stellen in Verlauf des Förderstroms in die Herstellungsvorrichtung einzuspeisen.

Die erfindungsmäßen Vorrichtung kann wenigstens ein Kühlelement und/oder wenigstens ein Heizelement umfassen. Besonders bevorzugt kann vorgesehen sein, dass in Richtung des Förderstroms an der Vorrichtung zunächst wenigstens ein Heizelement und darauf förderstromabwärts folgend wenigstens ein Kühlelement vorgesehen ist. Insbesondere können ein Heizelement und/oder ein Kühlelement förderstromaufwärts wenigstens einer Flüssigkeitszuführung und/oder wenigstens einer Feststoffzuführung vorgesehen sein, welche Zuführung nahe dem Endbereich oder am Endbereich angeordnet ist, wobei insbesondere diese endbereichsnahe Zuführung zum Einspeisen mindestens eines Dispergieradditivs, mindestens eines Entschäumers, mindestens eines Verdickers und/oder vorzugsweise mindestens eines Bindemittels ausgelegt und eingerichtet ist. Alternativ oder zusätzlich weist die erfindungsgemäße Vorrichtung optional, bevorzugt nahe dem Endbereich, besonders bevorzugt im letzten Drittel des Doppelschneckenextruders, wenigstens eine Entgasungsvorrichtung, beispielsweise zwei Entgasungsvorrichtungen, auf, und zwar vorzugsweise im Bereich einer Förderzone.

Gemäß einer zweckmäßigen Ausgestaltung der Vorrichtung weisen die einzelnen Förderzonen, die einzelnen dispersiv mischenden Knetzonen und/oder die einzelnen distributiv mischenden Elemente bzw. Rührzonen jeweils eine Länge im Bereich von 0,5D bis 2,0D auf. Es sei klar, dass eine einzelne Förderzone oder eine einzelne mischende Knet- oder Rührzone aus mehreren funktionell gleichartigen Elementen bzw. Ringabschnitten des Doppelschneckenextruders gebildet sein kann. Eine einzelne Förderzone ist förderstromaufwärts und förderstromabwärts begrenzt durch ein vorderes oder hinteres Ende des Doppelschneckenextruders oder durch einen Förderzonen-fremden Ringabschnitt, beispielsweise einen Ringabschnitt, der Teil einer dispergierend und oder distributiv mischenden Zone bildet. Eine einzelne mischende Knet- oder Rührzone ist förderstromaufwärts und förderstromabwärts begrenzt durch ein vorderes oder hinteres Ende des Doppelschneckenextruders oder durch einen mischerfremden Ringabschnitt, wie einen Ringabschnitt einer Förderzone. Eine distributiv mischende Rührzone kann förderstromaufwärts oder förderstromabwärts begrenzt sein durch eine dispergierend mischende Knetzone. Eine dispergierend mischende Knetzone kann förderstromaufwärts oder förderstromabwärts begrenzt sein durch eine distributiv mischende Rührzone.

Die der Erfindung zugrunde liegende Aufgabe wird des Weiteren gelöst durch ein Verfahren, insbesondere ein kontinuierliches Verfahren, zum Herstellen einer, insbesondere homogenen, Pigment- und/oder Füllstoffdispersion, wie eine Dispersionsfarbe, Farb- oder Füllstoffpaste oder ein lösungsmittelhaltiger oder wässriger Lack.

Das erfindungsgemäße Verfahren umfasst das Bereitstellen mindestens eines Dispergieradditivs, das Bereitstellen mindestens einer Pigment- und/oder Füllstoffkomponente, und das Bereitstellen mindestens einer Flüssigkomponente sowie gegebenenfalls Bereitstellen mindestens eines Rheologieadditivs. Das Verfahren umfasst ferner das Einführen von dem mindestens einen Dispergieradditiv, der mindestens einen Pigment- und/oder Füllstoffkomponente und der mindestens einen Flüssigkomponente sowie gegebenenfalls des mindestens einen Rheologieadditivs in einen Doppelschneckenextruder, der insbesondere Teil einer Vorrichtung nach einem der vorangehenden Ansprüche ist. Das mindestens eine Dispergieradditiv und die mindestens eine Flüssigkomponente sowie gegebenenfalls des mindestens einen Rheologieadditivs werden bevorzugt im Bereich einer Förderzone eingeführt. Das mindestens eine Dispergieradditiv und die mindestens eine Flüssigkomponente können förderstromaufwärts oder förderstromabwärts in Relation zu der Pigment- und/oder Füllstoffkomponente eingeführt werden.

Das erfindungsgemäße Verfahren umfasst ferner das Vermengen des mindestens einen Dispergieradditivs, der mindestens einen Pigment- und/oder Füllstoffkomponente und der mindestens einen Flüssigkomponente sowie gegebenenfalls des mindestens einen Rheologieadditivs in einer dispersiv mischenden Knetzone des Doppelschneckenextruders förderstromabwärts der Förderzone unter Ausbildung und Förderung einer Pigment- und/oder Füllstoffdispersion. Außerdem umfasst das erfindungsgemäße Verfahren das Abgeben der Pigment- und/oder Füllstoffdispersion am Endbereich des Doppelschneckenextruders.

Gemäß einer bevorzugten Ausführungsformform des erfindungsgemäßen Verfahrens umfasst das mindestens eine Dispergieradditiv beim Bereitstellen oder beim Einführen mindestens ein Netzmittel und/oder mindestens ein Dispergiermittel. Diese Dispergieradditive umfassen auch solche Verbindungen, die sowohl als Netzmittel wie auch als Dispergiermittel fungieren können. In einer weiteren bevorzugten Ausführungsform des erfindungsgemäßen Verfahrens umfasst das mindestens eine Rheologieadditiv mindestens einen Verdicker.

Bei einer zweckmäßigen Ausführungsform des erfindungsgemäßen Verfahrens umfasst das mindestens eine Dispergieradditiv, bezogen auf die Förderrate, Netzmittel in einem Bereich von 1-6 %, vorzugsweise 2-5 %, besonders bevorzugt 3-4 %. Alternativ oder zusätzlich kann das mindestens eine Dispergieradditiv, bezogen auf die Förderrate, Dispergiermittel in einem Bereich von 1-6 %, vorzugsweise 2-5 %, besonders bevorzugt 3-4 %, umfassten. Weiterhin kann das Rheologieadditiv bei dem erfindungsgemäßen Verfahren alternativ oder zusätzlich, bezogen auf die Förderrate, Verdicker in einem Bereich von 3-8 %, vorzugsweise 4-6 %, besonders bevorzugt 3-4 %, umfassen.

Bei einer Ausführungsform des erfindungsgemäßen Verfahrens wird das mindestens eine Dispergieradditiv in flüssiger Form, insbesondere in Form einer Lösung oder in Form einer Suspension, in den Doppelschneckenextruder eingeführt wird. Es kann bevorzugt sein, dass die mindestens eine Pigment- und/oder Füllstoffkomponente in fester Form, insbesondere pulverförmig, in den Doppelschneckenextruder eingeführt wird.

Bei einer Ausführungsform des erfindungsgemäßen Verfahrens weist die mindestens eine Flüssigkomponente eine Viskosität größer oder gleich 10 Pa.s, bevorzugt größer oder gleich 20 Pa.s, auf. Alternativ oder zusätzlich, vorzugsweise in Kombination mit der hohen Viskosität größer oder gleich 10 Pa.s, bevorzugt größer oder gleich 20 Pa.s, wird der Doppelschneckenextruder insbesondere kontinuierlich mit einer Schneckendrehzahl im Bereich von 900 U/min bis 1400 U/min, bevorzugt im Bereich von 1000 U/min bis 1300 U/min und besonders bevorzugt im Bereich 1100 U/min bis 1250 U/min betrieben.

Gemäß einer ersten besonders bevorzugten Ausführungsform ist das erfindungsgemäße Verfahren, insbesondere unter Verwendung mindestens einer Flüssigkomponente hoher Viskosität größer oder gleich 10 Pa.s, bevorzugt größer oder gleich 20 Pa.s, und/oder einer hohen Schneckendrehzahl im Bereich von wenigstens 900 U/min, zur Herstellung einer Farb- oder Füllstoffpaste eingerichtet, wobei die mindestens eine Flüssigkomponente im Bereich einer ersten Förderzone eingespeist wird und wobei die Pigment- und/oder Füllstoffkomponente in Relation zu der Flüssigkomponente förderstromabwärts eingespeist wird, insbesondere in einer zweiten Förderzone. Die vorangehend geschilderte Ausführungsvariante kommt bevorzugt bei der Herstellung von Spachtelmassen und Pasten, z.B. Farbpasten, zum Einsatz.

Gemäß einer erfindungsgemäßen Weiterbildung, weist die mindestens eine Flüssigkomponente eine Viskosität kleiner 10 Pa.s sowie vorzugsweise kleiner 5 Pa.s auf.

Das Merkmal der Viskosität im Sinne der Erfindung wird bei einer Temperatur von 23 ± 0,20 °C ermittelt, z.B. gemäß DIN 53019 (Ausgabe 05/1980).

Insbesondere umfasst die Flüssigkomponente Wasser. Vorzugsweise umfasst die Flüssigkomponente, bezogen auf die Förderrate, Wasser in einem Bereich von 5-35 %, vorzugsweise 10-25 %, besonders bevorzugt 12-18 %. Die vorangehend geschilderten Angaben kommen insbesondere bei der Herstellung von Lacken, Farben, insbesondere Dispersionsfarben, Spachtelmassen und Pasten, z.B. Farbpasten, zum Einsatz.

Bei einer bevorzugten Weiterbildung der Erfindung, die insbesondere in Kombination mit der Verwendung einer Flüssigkomponente mit einer geringen Viskosität kleiner 10 Pa s vorgesehen sein kann, wird der Doppelschneckenextruder mit einer Schneckendrehzahl im Bereich von 500 bis 850 U/min, bevorzugt im Bereich von 600 bis 750 U/min betrieben.

Gemäß einer zweiten besonders bevorzugten Ausführungsform ist das erfindungsgemäße Verfahren, insbesondere unter Verwendung mindestens einer Flüssigkomponente mit geringer Viskosität kleiner 10 Pa s, insbesondere kleiner 5 Pa.s, und/oder, insbesondere und, einer geringen Drehzahl in einem Bereich unterhalb 850 U/min, zur Herstellung einer Dispersionsfarbe oder eines lösungsmittelhaltigen oder wässrigen Lacks eingerichtet, wobei die mindestens eine Pigment- und/oder Füllstoffkomponente im Bereich der ersten Förderzone eingespeist wird und wobei die Flüssigkomponente in Relation zu der Pigment- und/oder Füllstoffkomponente förderstromabwärts eingespeist wird, insbesondere in einer zweiten Förderzone.

Eine zweckmäßige Ausführungsform des erfindungsgemäßen Verfahrens kann ferner das Bereitstellen eines Bindemittels und/oder mindestens ein weiteren Additivs; das Einführen des mindestens einen Bindemittels und/oder des mindestens einen weiteren Additivs sowie gegebenenfalls des mindestens einen Rheologieadditivs; und das Vermengen des mindestens einen Dispergieradditivs, der mindestens einen Pigment- und/oder Füllstoffkomponente und der mindestens einen Flüssigkomponente sowie des mindestens einen Bindemittels und/oder des mindestens einen weiteren Additivs sowie gegebenenfalls des mindestens einen Rheologieadditivs umfassen

Gemäß einer Weiterbildung einer erfindungsmäßen Ausführungsform wird das mindestens eine Bindemittel als eine Feststoffkomponente mit einer Feststoffzuführung zugeführt. Alternativ kann das mindestens eine Bindemittel in flüssiger Form, insbesondere in Form einer Suspension oder Dispersion, in den Doppelschneckenextruder eingespeist werden.

Vorzugsweise wird das mindestens eine Bindemittel, bezogen auf die Förderrate, in einem Bereich von 4-25 %, vorzugsweise 6-18 %, besonders bevorzugt 9-14 %, bereitgestellt.

Gemäß einer zweckmäßigen Weiterbildung wird das mindestens eine Bindemittel in Relation zu der mindestens einen Pigment- und/oder Füllstoffkomponente und/oder in Relation zu der mindestens eine Flüssigkomponente förderstromabwärts in den Doppelschneckenextruder eingespeist, insbesondere im Bereich einer Förderzone.

Insbesondere kann bei einem erfindungsmäßen Verfahren vorgesehen sein, dass der Doppelschneckenextruder insbesondere förderstromaufwärts der Einspeisung des mindestens einen Bindemittels den Doppelschneckenextruder mindestens abschnittsweise in einem Heizabschnitt erwärmt wird, vorzugsweise unter Verwendung der Scherwärme des Extruders und einer Zusatzheizung, insbesondere auf Temperaturen im Bereich von 30 °C bis 120 °C, vorzugsweise 50 bis 80 °C. Durch die zumindest kurzzeitige Erhitzung der Komponenten in dem Doppelschneckenextruder können Keime in den Flüssigkomponenten und/oder den Feststoffkomponenten, aus welchen die Füllstoff- und/oder Pigmentdispersion gebildet wird, auf schonende Weise vernichtet und die Keimzahl auf diese Weise effizient reduziert werden. So können die Heizbedingungen derart gewählt werden, dass z.B. hitzesensible Komponenten der die Pigment- und/oder Füllstoffdispersionen nicht in Mitleidenschaft gezogen werden.

Alternativ oder zusätzlich kann gemäß einer Weiterbildung vorgesehen sein, dass der Doppelschneckenextruder förderstromaufwärts der Einspeisung des mindestens einen Bindemittels und mindestens abschnittweise in einem Kühlabschnitt gekühlt wird, insbesondere auf Temperaturen im Bereich von 15 bis 30 °C. Eine Abkühlung des Gemischs in dem Doppelschneckenextruder insbesondere vor dem Einspeisen des wenigstens einen Bindemittels kann gewährleisten, dass temperaturempfindliche Komponenten, wie insbesondere Bindemittel, nicht infolge einer Erwärmung, insbesondere einer Schererwärmung, beeinträchtigt werden. Bevorzugt liegt der Kühlabschnitt förderstromabwärts des Heizabschnitts vor sowie insbesondere förderstromaufwärts der Einspeisung des Bindemittels.

Besonders bevorzugt wird bei dem erfindungsgemäßen Verfahren der Kühlabschnitt förderstromabwärts des Heizabschnitts durchlaufen.

Bei einer Ausführungsform vom des erfindungsgemäßen Verfahrens kann es insbesondere vorgesehen sein, dass die Pigment- und/oder Füllstoffdispersion mit einer, insbesondere kontinuierlichen, Förderrate von wenigstens 100 kg/h oder wenigstens 150 kg/h, insbesondere wenigstens 200 kg/h, vorzugsweise wenigstens 500 kg/h, besonders bevorzugt wenigstens 1000 kg/h, aus dem Doppelschneckenextruder abgegeben wird.

Vorzugsweise wird bei einer Ausführungsform vom des erfindungsgemäßen Verfahrens die Pigment- und/oder Füllstoffdispersion von Partikeln, insbesondere Partikeln der Pigmentkomponente, mit einer Kornfeinheit von wenigstens 200 µm, bevorzugt wenigstens 150 µm und besonders bevorzugt wenigstens 100 µm, gereinigt. Insbesondere kann eine Kornfeinheit von wenigstens 50 µm, bevorzugt wenigstens 30 µm vorgesehen sein. Alternativ oder zusätzlich werden bei einer Ausführungsform des erfindungsgemäßen Verfahrens Partikel, insbesondere Partikel der Pigmentkomponente, geliefert mit einer Kornfeinheit, insbesondere D50, von kleiner 200 µm, bevorzugt kleiner 150 µm und besonders bevorzugt kleiner 100 µm. Es kann bevorzugt sein, dass eine maximale Partikelgröße von wenigstens 0,1 µm, insbesondere wenigstens 0,5 µm, vorzugsweise wenigstens 1,0 µm toleriert wird. Besonders bevorzugt werden Pigment- und/oder Füllstoffpartikel mit einer mittleren Größe D50, insbesondere absoluten Größe, der Einzelpartikel im Bereich von 0,1 µm bis 10 µm und insbesondere im Bereich von von 0,5 µm bis 5 µm eingesetzt. Mit dem erfindungsgemäßen Verfahren können selbstverständlich auch - alternativ oder zusätzlich - Pigment- und/oder Füllstoffpartikelagglomerate mit einer mittleren Größe, insbesondere absoluten Größe, der Agglomerate im Bereich von größer 10 µm bis 200 µm und insbesondere im Bereich von von 50 µm bis 150 µm eingesetzt werden.

Bei einer zweckmäßigen Ausführungsform des erfindungsgemäßen Verfahrens werden dem Doppelschneckenextruder wenigstens 1 %, insbesondere wenigstens 5 %, und höchstens 75 %, insbesondere höchstens 30 % einer ersten Pigment- und/oder Füllstoffkomponente, bezogen auf die Förderrate, zugeführt werden. Insbesondere werden dem Doppelschneckenextruder wenigstens 0,01 %, insbesondere wenigstens 0,1 %, und höchstens 10 %, insbesondere höchstens 5 % einer zweiten Pigment- und/oder Füllstoffkomponente, bezogen auf die Förderrate zugeführt.

Bei einer Ausführungsform des erfindungsgemäßen Verfahrens werden dem Doppelschneckenextruder wenigstens 5 %, insbesondere wenigstens 10 %, und höchstens 90 %, insbesondere höchstens 75 % einer ersten Flüssigkomponente bezogen auf die Förderrate zugeführt. Insbesondere werden dem Doppelschneckenextruder wenigstens 5 %, insbesondere wenigstens 10 %, und höchstens 70 %, insbesondere höchstens 50 % einer zweiten Flüssigkomponente bezogen auf die Förderrate, zugeführt. Insbesondere werden dem Doppelschneckenextruder wenigstens 0,1 %, insbesondere wenigstens 0,5 %, und höchstens 15 %, insbesondere höchstens 10 % einer dritten Flüssigkomponente bezogen auf die Förderrate zugeführt.

Bei dem erfindungsgemäßen Verfahren liegt eine Compoundierverweilzeit im Doppelschneckenextruder im Bereich von 0,5 min bis 5 min, insbesondere im Bereich von 1,5 min bis 4 min. Die Compoundierverweilzeit kann sich insbesondere auf eine Verweilzeit einer Fraktion einer bestimmten Feststoff- und/oder Flüssigkomponente beziehen, hinsichtlich der Verweilzeit von der Einspeisung in den Doppelschneckenextruder bis zu der Abgabe der Fraktion am Endbereich des Doppelschneckenextruders. Die Compoundierverweilzeit bezieht sich auf eine Fraktion einer in dem Doppelschneckenextruder verarbeiteten Komponente.

Gemäß einer Ausführungsform des erfindungsgemäßen Verfahrens umfasst es keinen Entgasungs- oder Evakuierungsschritt. Diese Ausführungsvariante ist insbesondere bevorzugt bei der Herstellung von solchen Pigment- und/oder Füllstoffdispersionen, die über eine Viskosität kleiner 5 Pa.s verfügen, also beispielsweise bei der Herstellung von Dispersionsfarben und Lacksystemen.

Hingegen hat es sich als vorteilhaft erwiesen, bei der Herstellung von solchen Pigment- und/oder Füllstoffdispersionen, die über eine Viskosität größer oder gleich 5 P.s, bevorzugt größer oder gleich 10 Pa.s und besonders bevorzugt größer oder gleich 50 Pa.s verfügen, also beispielsweise bei der Herstellung von Farb- und Rußpasten, mindestens einen Entgasungs- oder Evakuierungsschritt, insbesondere Entgasungsschritt, vorzugsweise im letzten Drittel des Doppelschneckenextruders, besonders bevorzugt im Bereich einer Förderzone, vorzusehen.

Demgemäß weisen diejenigen erfindungsgemäßen Vorrichtungen im Allgemeinen mindestens eine Entgasungs- und/oder Evakuierungseinheit, insbesondere eine Entgasungseinheit, auf, vorzugsweise im letzten Drittel des Doppelschneckenextruders, besonders bevorzugt im Bereich einer Förderzone, die für die Herstellung von Pigment- und/oder Füllstoffdispersionen mit einer Viskosität größer 5 P.s, beispielsweise Farb- und Rußpasten, eingesetzt werden, wohingegen solche erfindungsgemäßen Vorrichtungen, die regelmäßig für die Herstellung von Pigment- und/oder Füllstoffdispersionen mit einer Viskosität kleiner 5 Pa.s, beispielsweise Dispersionsfarben und Lacksysteme, eingesetzt werden, ohne Entgasungs- und Evakuierungseinheiten auskommen.

Gemäß einer bevorzugten Ausführungsform des erfindungsgemäßen Verfahrens umfasst die Pigmentkomponente z.B. Titandioxid und/oder Ruß. Vorzugsweise umfasst die erste Pigment- und/oder Füllstoffkomponente, bezogen auf die Förderrate, Titandioxid in einem Bereich von 1-25 %, vorzugsweise 3-16 %, besonders bevorzugt 6-10 %. Alternativ oder zusätzlich umfasst die erste Füllstoffkomponente, bezogen auf die Förderrate, Calciumcarbonat in einem Bereich von 10-70 %, vorzugsweise 20-60 %, besonders bevorzugt 30-50 %. Als Ruß kommt insbesondere Carbon Black in Betracht.

Bei dem erfindungsgemäßen Verfahren kann es zweckmäßig sein, dass die erste Pigment- und/oder Füllstoffkomponente, bezogen auf die Förderrate, Silikate, z.B. Magnesiumsilikathydrat, in einem Bereich von 1-25 %, vorzugsweise 3-16 %, besonders bevorzugt 6-10 %, umfasst.

Gemäß einer bevorzugten Ausführungsform des erfindungsgemäßen Verfahrens wird in derselben Förderzone wie das Dispergieradditiv und die Flüssigkomponente ein Entschäumer eingespeist. Insbesondere wird, bezogen auf die Förderrate, in einem Bereich von 0,05-1 %, vorzugsweise 0,1-0,5 %, besonders bevorzugt 0,2-0,4 %, Entschäumer bereitgestellt.

Bei einer besonders bevorzugten Ausführungsform des erfindungsgemäßen Verfahrens wird im Endbereich des Doppelschneckenextruders ein Bindemittel als Feststoffkomponente oder als flüssige Komponente eingespeist. Insbesondere wird das Bindemittel, bezogen auf die Förderrate, in einem Bereich von 4-25 %, vorzugsweise 6-18 %, besonders bevorzugt 9-14 %, bereitgestellt.

Alternativ oder zusätzlich kann gemäß einer Ausführungsform im Endbereich des Doppelschneckenextruders ein Verdicker als Feststoffkomponente oder als flüssige Komponente eingespeist werden. Insbesondere wird der Verdicker, bezogen auf die Förderrate, in einem Bereich von 1-10 %, vorzugsweise 3-8 %, besonders bevorzugt 4-6 %, bereitgestellt.

Es kann zweckmäßig sein, dass im Endbereich des Doppelschneckenextruders ein Konservierungsmittel eingespeist wird. Insbesondere wird das Konservierungsmittel, bezogen auf die Förderrate, in einem Bereich von 0,05-0,5 %, vorzugsweise 0,1-0,4 %, besonders bevorzugt 0,2-0,3 %, bereitgestellt.

Gemäß einer besonders bevorzugten Ausführungsform der Erfindung werden entlang des Doppelschneckenextruders mehrfach alternierend Förderzonen und dispersiv mischende Knetzonen durchlaufen.

Mit der erfindungsgemäßen Vorrichtung und dem erfindungsgemäßen Verfahren können überraschenderweise sowohl hochviskose Produkte wie Rußpasten, d.h. pastöse Systeme mit einer Viskosität von zum Beispiel 100 Pa.s und auch darüber, z.B. im Bereich von 500 bis 1000 Pa.s, als auch Anstrichfarben wie Dispersionsfarben, z.B. mit einer Viskosität im Bereich von 1 bis 2 Pa.s, und überdies auch dünnflüssige Systeme wie Lacke, z.B. mit einer Viskosität im Bereich von 200 bis 500 mPa.s, hergestellt werden.

Von besonderem Vorteil ist auch, dass die erfindungsgemäße Vorrichtung kaum oder gar kein sogenanntes Totvolumen aufweist, mit anderen Worten bei der Herstellung von Pigment- und/oder Füllstoffdispersionen kaum bzw. keine Abschnitte aufweist, die einen sogenannten Luftraum bilden, d.h. ein Volumen, in dem über längere Zeiträume nur Luft bzw. ein Gas vorliegt, nicht jedoch auch eine Vor- bzw. Zwischen- oder Endstufe der Pigment- und/oder Füllstoffdispersionen. Je weniger Totvolumen bzw. je weniger Lufträume die Vorrichtung aufweist, umso geringer ist in der Regel die Gefahr von mikrobiellem Befall. Somit geht mit der erfindungsgemäßen Vorrichtung und dem erfindungsgemäßen Verfahren der Vorteil einher, dass sich Pigment- und/oder Füllstoffdispersionen erhalten lassen, die gegenüber herkömmlichen Pigment- und/oder Füllstoffdispersionen mit einer geringeren Menge an Konservierungsmitteln ausgestattet sind.

Durch die zumindest kurzzeitige Erhitzung der Komponenten in dem Doppelschneckenextruder in dem mindestens einen Heizabschnitt können Keime in den Flüssigkomponenten und/oder den Feststoffkomponenten, aus welchen die Füllstoff- und/oder Pigmentdispersion gebildet wird, gezielt vernichtet und die Keimzahl wirksam reduziert werden. Demgemäß gelingt vorzugsweise eine signifikante Reduzierung der Keimzahl im Herstellprozess unter schonenden Bedingungen, so dass sich der Einsatz an Konservierungsmitteln reduzieren oder sogar komplett vermeiden lässt, und zwar insbesondere auch dann, wenn man einen Heizabschnitt mit einem förderstromabwärts zu diesem vorliegenden Kühlabschnitt kombiniert, wobei dieser Kühlabschnitt vorzugsweise vor der Einspeisung des mindestens einen Bindemittels lokalisiert ist. Im Ergebnis lässt sich somit durch eine, insbesondere kurzzeitige, Erhitzung und anschließender Kühlung überraschender Weise eine Reduktion der Verkeimung bewirken, ohne dass dabei z.B. empfindliche Komponenten wie insbesondere organische Bestandteile in Mitleidenschaft gezogen werden.

Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigt:

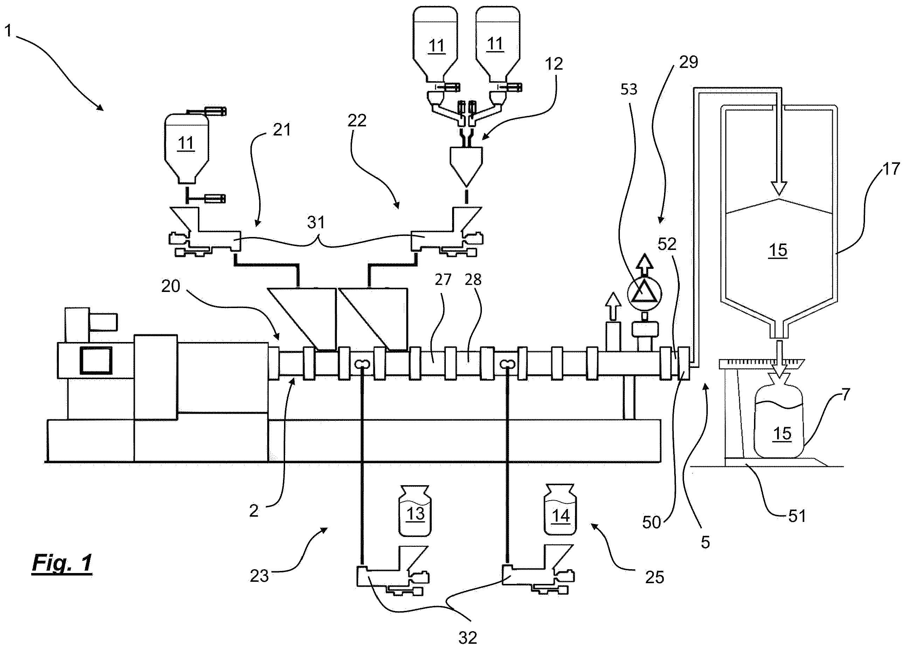

- Figur 1: eine schematische Darstellung einer exemplarischen Vorrichtung gemäß der Erfindung.

Es sei klar, dass die im Folgenden anhand von Figur 1 exemplarische dargestellte findungsgemäße Vorrichtung 1, die insbesondere zur Durchführung eines erfindungsgemäßen Verfahrens ausgelegt und eingerichtet ist, in der vorliegenden Offenbarung nur schematisch dargestellt und exemplarisch beschrieben wird. Im Rahmen der Offenbarung sind zahlreiche Variationen gegenüber der exemplarisch in Figur 1 dargestellten bevorzugten Ausführungsform denkbar.

Die erfindungsgemäße Vorrichtung 1, welche zur Herstellung einer Pigment- und/oder Füllstoffdispersion 15 ausgelegt und eingerichtet ist, umfasst als wesentliche Komponente einen Doppelschneckenextruder 2. Die Schnecken des Doppelschneckenextruders 2 rotieren vorzugsweise gleichläufig. Der Doppelschneckenextruder 2 hat einen Anfangsbereich 20 und einen Endbereich 29. Am Endbereich 29 des Doppelschneckenextruders 2 ist eine Abgabeeinheit 5 vorgesehen. Der Doppelschneckenextruder hat vom Anfangs- (20) bis zum Endbereich 29 eine Länge L und ist durch einen Wirkdurchmesser D definiert. Das L/D-Verhältnisse des Doppelschneckenextruders 2 liegt im Bereich von 25:1 bis 70:1, insbesondere bei wenigstens 50 L/D. Als Doppelschneckenextruder 2 kommt beispielsweise der Extruder ZG 40A 42 UTX von Krauss-Maffei Berstorff infrage.

Entlang seiner Länge ist der Doppelschneckenextruder 2 in dieser Reihenfolge mit wenigstens einer Fördererzone, wenigstens eine ersten dispersiv mischende Knetzone, wenigstens einer zweiten Förderzone und wenigstens eine zweite dispersiv mischenden Knetzone ausgestattet. Eine dispersiv mischende Knetzone kann beispielsweise durch ein Paar Knetblock-Elemente des Doppelschneckenextruders 2 gebildet sein. Der Doppelschneckenextruder kann zwischen 5 und 20, vorzugsweise 10 bis 15, insbesondere etwa 12 Paare an Knetblöcken aufweisen, um die dispersiv mischenden Knetzonen zu realisieren.

Entlang des Doppelschneckenextruders 2 von seinem Anfangsbereich 20 hin zu seinem Endbereich 29 ist die Förderstrom-Richtung definiert. Entlang der Länge des Doppelschneckenextruders 2 ist eine erste Feststoffzuführung 21, eventuell eine zweite Feststoffzuführung 22 sowie gegebenenfalls weiterer Feststoffzuführungen (nicht näher dargestellt) vorgesehen. Ferner sind entlang des Doppelschneckenextruders 2 eine erste Flüssigkeitszuführung 23, eventuell eine zweite Flüssigkeitszuführung 25 sowie gegebenenfalls weitere Flüssigkeitszuführung (nicht näher dargestellt) vorgesehen.

Bei dem in Figur 1 exemplarisch dargestellten Doppelschneckenextruder 2 ist am Anfangsbereich 20 zunächst erste Feststoffzuführung 21 vorgesehen. Förderstromabwärts von der ersten Feststoffzuführung 21 ist die erste Flüssigkeit-Zuführung 23 angeordnet. Danach weist der Doppelschneckenextruder 2 einen Anschluss für eine zweite Feststoffzuführung 22 auf. Nahe dem Endbereich 29 des Doppelschneckenextruders 2 ist eine zweite Flüssigzuführung 25 angeordnet. Es sei klar, dass eine andere Anzahl und/oder Anordnungen von Feststoffzuführungen und/oder Flüssigkeitszuführungen im Rahmen der Erfindung denkbar sind.

Die hier exemplarisch dargestellte erste Feststoffzuführung 21 umfasst einen Vorratsbehälter, in dem eine Pigment- und/oder Füllstoffkomponente 11 bevorratet ist, sowie eine Feststoffdosiervorrichtung 31, die gravimetrisch oder volumetrisch die Menge an Pigment- und/oder Füllstoff Komponente 11 bestimmt, welche mit der Feststoffzuführung 21 in den Doppelschneckenextruder 2 eingespeist wird. Die zweite Feststoffzuführung 22 sowie eventuelle weitere Feststoffzuführungen können gleichartig ausgebildet sein.

Die zweite Feststoffzuführung 22 ist hier schematisch mit zwei Vorratsbehältern für verschiedene Pigment- und/oder Füllstoffkomponenten 11 ausgestattet, die zu einem Vormischer 26 führen, durch den aus den bei den verschiedenen Pigment- und/oder Füllstoff Komponenten 11 ein Premix 12 gebildet wird. Der Premix 12 wird über eine zweite Feststoffdosiervorrichtung 31 gravimetrischen oder volumetrisch zur Zugabe in den Doppelschneckenextruder 2 mit der zweiten Feststoffzuführung 22 dosiert. Die Feststoffdosiervorrichtung 31 kann beispielsweise realisiert sein durch als Brabender Flexwall FW 40+. Es sei klar, dass ein Premix 12 aus mehr als zwei Komponenten gebildet werden kann und dass ein Premix 12 unabhängig von der erfindungsgemäßen Vorrichtung 1 präpariert und in einem Vorratsbehälter bereitgestellt werden kann.

Die hier exemplarisch dargestellte erste Flüssigkeitszuführung 23 umfasst einen Vorratsbehälter, in dem ein mindestens ein Dispergieradditiv 13 bevorratet ist, sowie eine Flüssigkeitsdosiervorrichtung 32, die gravimetrischen oder volumetrisch die Menge des mindestens einen Dispergieradditiv 13 bestimmt, welche mit der Flüssigkeitszuführung 23 in den Doppelschneckenextruder 2 eingespeist wird. Die zweite Flüssigkeitszuführung 25 sowie eventuelle weitere Flüssigkeitszuführung können gleichermaßen ausgebildet sein. Die Flüssigkeitsdosiervorrichtung 32 kann eine Exzenterschneckenpumpe, insbesondere eine sogenannte "Mohno Pumpe" umfassen.

Die exemplarisch dargestellte zweite Flüssigkeitszuführung 25 kann entsprechend der ersten Flüssigkeitszuführung 23 ausgebildet sein. Bei dem in Figur 1 dargestellten Beispiel ist in dem Vorratsbehälter der zweiten Flüssigkeitszuführung 23, die eine Einspeisung nahe dem Endbereich 29 des Doppelschneckenextruders 2 förderstromabwärts des Kühlabschnitts 28 bewirkt, mindestens ein Bindemittel 14 bevorratet.

Entsprechend einem Feststoff-Premix 12 ist es denkbar, dass aus verschiedenen Flüssigkomponenten, beispielsweise mindestens einem Dispergieradditiv, mindestens einem Bindemittel, mindestens ein Konservierungsmittel, mindestens einem Entschäumer, und/oder mindestens einem Rheologieadditiv, wie mindestens einem Verdicker, ein flüssig-Premix gebildet ist, welcher in einem Vorratsbehälter der Vorrichtung 1 zur Einspeisung in den Doppelschneckenextruder 2 bereitgestellt sein kann (nicht näher dargestellt).

Förderstromaufwärts der zweiten Flüssigkeitszuführung 25 ist der Doppelschneckenextruder 2 mit einem Heizabschnitt 27 und einem Kühlabschnitt 28 ausgestattet. In dem Heizabschnitt 27 kann durch die Scherwärme insbesondere von wenigstens eine dispergierend mischende Knetzone sowie gegebenenfalls durch das vorsehen zusätzlicher Heizelemente, beispielsweise Heizpatronen, eine Erwärmung des Doppelschneckenextruders 2 und der darin geführten Komponenten zur Bildung einer Füllstoff- und/oder Pigmentdispersion 15 bewirkt werden. Vorzugsweise erfolgt in dem Heizabschnitt 27 eine Erwärmung auf 50 °C bis 80 °C. In dem Kühlabschnitt 28 ist der Doppelschneckenextruder 2 mit wenigstens einem Kühlelement, wie einer Flüssigkühlung, ausgestattet, um den Doppelschneckenextruder 2 und die darin geführten Komponenten zur Bildung einer Füllstoff- und/oder Pigmentdispersion 15 auf eine Temperatur unter 50 °C, insbesondere zwischen 10 °C und 30 °C, abzukühlen.

Der Endbereich 29 des Doppelschneckenextruders 2 ist mit einer Abgabeeinheit 5 ausgestattet, die beispielsweise eine Abgabedüse umfassen kann.

Am Endbereich 29 des Doppelschneckenextruders 2 können eine Entgasungsvorrichtung 53, eine Pumpe 50 und/oder ein Sieb 52 angeordnet sein. Die Entgasungsvorrichtung 53 kann eine Vakuumpumpe oder dergleichen zur Verstärkung der Entgasungswirkung aufweisen. Mit der Pumpe 50 kann die Förderrate und/oder die Compoundierverweilzeit eingestellt werden. Das Sieb 52 oder in Ergänzung zu oder anstelle eines Siebs 52 kann eine Perlmühle vorgesehen sein, wobei das Sieb 52 und/oder die Perlmühle dazu ausgelegt und eingerichtet ist, Partikelagglomerate der Pigment- und/oder Feststoffkomponente einem Filter- und/oder Scherschritt zu unterwerfen, insbesondere um eine größte zulässige Partikelgröße einzustellen.

Die Abgabeeinheit 5 kann als zusätzliche Komponenten, die den Doppelschneckenextruder 2 ergänzen, beispielsweise einen Pufferbehälter 17 und/oder einen Transportbehälter 7 umfassen, wobei ein Pufferbehälter 17 und/oder einen Transportbehälter 7 auf einer Waage 51 angeordnet sein können, welche die Mengen der fertigen Füllstoff- und/oder Pigmentdispersion in dem jeweiligen Behälter 7 oder 17 bestimmt. Im Folgenden wird die Erfindung anhand eines Ausführungsbeispiels näher erläutert. Das Ausführungsbeispiel beschreibt die Herstellung einer weißen Dispersionsinnenfarbe mittlerer Qualität mithilfe der erfindungsgemäßen Vorrichtung 1.

In einem in Förderrichtung des Doppelschneckenextruders 2 ersten Segment werden gravimetrischen oder volumetrisch dosiert Wasser, bezogen auf die Förderrate, in einem Bereich von bevorzugt 12 % bis 18 % eingespeist. An dem gleichen Extrudersegment werden, gravimetrischen oder volumetrisch dosiert, ein Netzmittel in einer Menge von 3 % bis 4 %, bezogen auf die Förderrate, eingespeist. Als weitere Flüssigkomponente wird, gravimetrischen oder volumetrisch dosiert, ein Dispergieradditiv eingespeist im Bereich von vorzugsweise 3 % bis 4 % bezogen auf die Förderrate. Ferner wird an demselben Segment des Doppelschneckenextruders 2 eine gravimetrische oder volumetrische Dosierung eines Entschäumers vorgesehen, wobei der Entschäumer im Bereich von bevorzugt 0,2 % bis 0,4 % bezogen auf die Förderrate bereitgestellt wird. Das Wasser, das Dispergieradditiv, der Entschäumer und das Netzmittel können als ein flüssige-Premix bereitgestellt sein. Alternativ ist es denkbar, dass für die vorgenannten Flüssigkomponenten je eine individuelle Flüssigzuführung mit einem individuell für die jeweilige Komponente vorgesehenen Flüssigdosierer bereitgestellt ist.

Förderstromabwärts des ersten Segments ist ein zweites Segment vorgesehen. In dem zweiten Segment des Doppelschneckenextruders 2 wird die Feststoffkomponente zu dosiert. Zu diesem Zweck können drei konventionelle gravimetrische Feststoffwaagen als Komponenten-individuelle-Feststoffdosiervorrichtungen 31 vorgesehen sein. Mit einer ersten Feststoffzuführung wird als Pigmentkomponente 11 Titandioxid bereitgestellt und in den Doppelschneckenextruder 2 eingespeist. Das Titandioxid wird in einer Menge bezogen auf die Förderrate von bevorzugt 6 bis 10 % bereitgestellt. Eine andere Feststoffzuführung (nicht näher dargestellt) enthält als Füllstoffkomponente Calciumcarbonat, welches in das zweiten Segment des Doppelschneckenextruders 2 eingespeist wird. Die Menge von Calciumcarbonat liegt bevorzugt im Bereich von 30 % bis 50 % bezogen auf die Förderrate. Außerdem ist in dem zweiten Segment eine weitere (nicht dargestellt) Feststoffzuführung vorgesehen, die Magnesiumsilikathydrat bevorratet. Mittels der dem Magnesiumsilikathydrat zugeordneten Feststoffdosiervorrichtung 31 wird es in einer Menge von bevorzugt 6 % bis 10 % bezogen auf die Förderrate bereitgestellt.

Alternativ kann das zweite Segment förderstromaufwärts des ersten Segments vorgesehen sein; in diesem Fall würden dem Doppelschneckenextruder 2 zunächst die Feststoffkomponenten und anschließend die Flüssigkomponenten zugeführt.

Die Feststoffzuführungen und die Flüssigzuführungen können derart ausgestaltet sein, dass sie steuerbar während des laufenden Prozesses aktiviert und/oder deaktiviert werden können. Beispielsweise kann wenigstens eine insbesondere zweite Feststoffzuführung und/oder insbesondere zweite Flüssigzuführung dazu eingerichtet sein, um während des laufenden Prozesses aktiviert zu werden, um einen Mischungsanteil einer Fest- oder Flüssigkomponente, beispielsweise eines Dispergieradditivs, signifikant zu erhöhen.

Die in dem ersten und dem zweiten Segment in den Doppelschneckenextruder 2 eingespeisten Rohstoffe werden in dem Doppelschneckenextruder 2 in wenigstens einem dispersiv in Mischelement mithilfe von Knetblöcken intensiv gemischt und geschert. Die erwärmte Mischung kann durch die Scherwärme sowie gegebenenfalls durch Heizpatronen in einem Heizabschnitt 27 zumindest kurzzeitig, d. h. für weniger als 60 Sekunden, insbesondere weniger als 30 Sekunden, vorzugsweise weniger als 10 Sekunden, auf wenigstens 80 °C erwärmt werden, sodass eventuell durch die Rohstoffe eingetragener Bakterien oder andere Keime Wärme sterilisiert werden. Mit einem an das den Heizabschnitt 27 anschließenden Kühlabschnitt 28 wird die Rohstoffmischung sukzessive wieder gekühlt.

Nahe dem Endbereich 29 wird in einem weiteren Segment des Doppelschneckenextruders 2 ein Bindemittel in einem Bereich von 9 % bis 14 % bezogen auf die Förderrate gravimetrisch oder volumetrisch zu dosiert. Das Bindemittel 14 kann beispielsweise durch eine weitere Flüssigkeitszuführung 25 in den Doppelschneckenextruders 2 eingespeist werden. Alternativ kann es denkbar sein, dass das Bindemittel als Feststoff beispielsweise in Pulverform bereitgestellt und durch eine nicht näher dargestellte Feststoffzuführung eingespeist wird. Bevorzugt wird das Bindemittel, vorzugsweise als organisches Bindemittel, in Form einer wässrigen Dispersion eingespeist.

Ferner kann nahe dem Endbereich 29, insbesondere in demselben Segment wie die Einspeisung des Bindemittels, eine Einspeisung für ein Rheologieaddiv, insbesondere einen Verdicker, vorgesehen sein. Der Verdicker oder ein anderes Rheologieadditiv können beispielsweise in einer Menge von vorzugsweise 4 % bis 6 % bezogen auf die Förderrate bereitgestellt werden. Ähnlich wie das Bindemittel kann das Rheologieadditiv als Feststoff oder Flüssigkeit, vorzugsweise in flüssiger Form, bereitgestellt werden.

Zusätzlich ist es denkbar, dass in demselben Segment wie die Bindemitteleinspeisung und/oder die Rheologieadditiv-Einspeisung ein Konservierungsmittel bereitgestellt wird, zum Beispiel in einem Bereich von 0,2% bis 0,3% bezogen auf die Förderrate.

Im Endbereich 29 ist ein Siebvorsatz 52 und/oder eine Perlmühle angeschlossen, um die Qualität der abzugebenden Dispersionsfarbe mit einem Vorzugweise im Mikrometerbereich einstelligen Korngrößenband einzustellen.

Die Dispersionsfarbe 15 kann kontinuierlich in einen Pufferbehälter 17 gefördert werden und aus diesem in einer durch eine Waage 51 dosiert Warenmenge in einen Transportbehälter 7 abgefüllt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Vorrichtung
- 2: Doppelschneckenextruder
- 5: Abgabeeinrichtung
- 7: Transportbehälter
- 11: solide Pigmentkomponente
- 12: Premix
- 13: flüssiges Dispersionsmittel
- 14: Bindemittel
- 15: flüssige Pigmentdispersion
- 20: Anfangsbereich
- 21: erste Feststoffzuführung
- 22: zweite Feststoffzuführung
- 23: erste Flüssigkeitszuführung
- 25: zweite Flüssigkeitszuführung
- 26: Vormischer
- 27: Heizabschnitt
- 28: Kühlabschnitt
- 29: Endbereich
- 31: Feststoffdosiervorrichtung
- 32: Flüssigdosiervorrichtung
- 50: Pumpe
- 51: Waage
- 52: Sieb
- 53: Entgasungsvorrichtung

## Patentansprüche

1. Vorrichtung (1) zur Herstellung einer Pigment- und/oder Füllstoffdispersion (15), wie eine Dispersionsfarbe, Farb- oder Füllstoffpaste oder ein lösungsmittelhaltiger oder wässriger Lack, umfassend
wenigstens einen Doppelschneckenextruder (2), insbesondere gleichläufigen Doppelschneckenextruder, mit
einem Anfangsbereich (20) und einem Endbereich (29), enthaltend eine Abgabeeinheit, und
einer Länge L vom Anfangs- bis zum Endbereich (29) sowie einem Durchmesser D, wobei das L/D-Verhältnis im Bereich von 25:1 bis 70:1, bevorzugt im Bereich von 35:1 bis 65:1 und besonders bevorzugt im Bereich von 40:1 bis 60:1, liegt, ausgelegt und eingerichtet zum kontinuierlichen Dispergieren wenigstens einer Pigmentkomponente und/oder wenigstens einer Füllstoffkomponente (11) in Gegenwart wenigstens eines Dispergieradditivs (13) und gegebenenfalls mindestens eines Rheologieadditivs unter Ausbildung und Förderung der Pigment- und/oder Füllstoffdispersion (15), wobei der Doppelschneckenextruder entlang der Länge L, in dieser Reihenfolge, mindestens eine erste Förderzone, umfassend mindestens ein Förderelement, mindestens eine erste dispersiv mischende Knetzone, umfassend mindestens ein dispersiv mischendes Knetelement, mindestens eine zweite Förderzone, umfassend mindestens ein Förderelement, und mindestens eine zweite dispersiv mischende Knetzone, umfassend mindestens ein dispersiv mischendes Knetelement, sowie gegebenenfalls mindestens eine distributiv mischende Rührzone, umfassend wenigstens ein distributiv mischendes Element, aufweist, wobei die mindestens zwei dispersiv mischenden Knetzonen 40 bis 95 %, bevorzugt 45 bis 75 %, der Länge L des Doppelschneckenextruders (2) ausmachen,
wobei die mindestens zwei Förderzonen 5 bis 60 %, bevorzugt 25 bis 55 %, der Länge L des Doppelschneckenextruders (2) ausmachen,
wobei die mindestens eine distributiv mischende Rührzone 0 bis 15 %, bevorzugt 5 bis 10 %, der Länge L des Doppelschneckenextruders (2) ausmacht, ferner umfassend
wenigstens eine am oder benachbart zum Anfangsbereich (20) an den Doppelschneckenextruder (2), insbesondere im Bereich einer Förderzone, angeschlossene oder anschließbare Feststoffzuführung (21, 22) zum Zuführen mindestens einer Feststoffkomponente in den Doppelschneckenextruder (2) und wenigstens eine am oder benachbart zum Anfangsbereich (20) und insbesondere benachbart zur Feststoffzuführung (21, 22) an den Doppelschneckenextruder (2), insbesondere im Bereich einer Förderzone, angeschlossene oder anschließbare Flüssigkeitszuführung (23, 25) zum Zuführen mindestens einer Flüssigkomponente in den Doppelschneckenextruder (2).

2. Vorrichtung (1) nach Anspruch 1, **dadurch gekennzeichnet, dass** diese eingerichtet und ausgelegt ist für ein, insbesondere kontinuierliches, Dispergieren der wenigstens einer Pigmentkomponente und/oder der wenigstens einer Füllstoffkomponente (11) in Gegenwart des wenigstens einen Dispergieradditivs und gegebenenfalls des mindestens einen Rheologieadditivs bei einer Schneckendrehzahl von wenigstens 750 U/min, bevorzugt wenigstens 1000 U/min und besonders bevorzugt im Bereich von 1100 bis 1400 U/min.

3. Vorrichtung (1) nach Anspruch 1 oder 2, **dadurch gekennzeichnet, dass** entlang der Länge L des Doppelschneckenextruders mehrere Förderzonen und dispersiv mischende Knetzonen zumindest abschnittsweise alternierend vorliegen.

4. Vorrichtung nach einem der vorstehenden Ansprüche, **gekennzeichnet durch** wenigstens eine benachbart zum Endbereich (29) und vor mindestens einer dispersiv mischenden Knetzone an den Doppelschneckenextruder (2), insbesondere im Bereich einer Förderzone, angeschlossene oder anschließbare Feststoffzuführung (21, 22) zum Zuführen mindestens einer Feststoffkomponente in den Doppelschneckenextruder (2) und/oder Flüssigkeitszuführung (23, 25) zum Zuführen mindestens einer Flüssigkomponente in den Doppelschneckenextruder (2).

5. Vorrichtung nach einem der vorstehenden Ansprüche, **gekennzeichnet durch** ein Sieb (52) und/oder eine Perlmühle im oder am Endbereich (29) der Vorrichtung, insbesondere als Bestandteil der Abgabeeinheit (5) oder hierauf folgend, ausgelegt und eingerichtet, um Partikelagglomerate der Pigment- und/oder Füllstoffkomponente einem Scherschritt zu unterwerfen, und/oder eine Messvorrichtung, wie eine Waage (51), zum Bestimmen der Menge an über die Abgabeeinheit (5), insbesondere in den Transportbehälter (7), abgegebene Pigment- und/oder Füllstoffdispersion (15).

6. Vorrichtung nach einem der vorangehenden Ansprüche, **dadurch gekennzeichnet, dass**
wenigstens eine erste Feststoffzuführung (21) im Bereich der ersten Förderzone angeschlossen oder anschließbar ist und dass wenigstens eine zweite Feststoffzuführung (21) im Bereich der zweiten Förderzone angeschlossen oder anschließbar ist.

7. Vorrichtung nach einem der vorstehenden Ansprüche, **dadurch gekennzeichnet, dass**
diese wenigstens eine, insbesondere gravimetrische oder volumetrische, Flüssigdosiervorrichtung zum, insbesondere kontinuierlichen, Zuführen mindestens einer Flüssigkomponente in den Doppelschneckenextruder (2) umfasst, wobei die wenigstens eine erste Flüssigkeitszuführung (23, 25) bevorzugt angeschlossen oder anschließbar ist an die erste Förderzone, und wobei die wenigstens eine zweite Flüssigkeitszuführung (23, 25), angeschlossen oder anschließbar ist an die zweite Förderzone.

8. Vorrichtung nach einem der vorstehenden Ansprüche, ferner umfassend wenigstens ein Kühlelement und/oder wenigstens ein Heizelement.
und/oder wenigstens eine Entgasungs- und/oder Evakuierungsvorrichtung (53), insbesondere Entgasungsvorrichtung, bevorzugt im letzten Drittel des Doppelschneckenextruders, besonders bevorzugt im Bereich einer Förderzone.

9. Verfahren, insbesondere kontinuierliches Verfahren, zum Herstellen einer insbesondere homogenen Pigment- und/oder Füllstoffdispersion (15), wie eine Dispersionsfarbe, Farb- oder Füllstoffpaste oder ein lösungsmittelhaltiger oder wässriger Lack, umfassend:
- Bereitstellen mindestens eines Dispergieradditivs (13),
- Bereitstellen mindestens einer Pigment- und/oder Füllstoffkomponente (11), und
- Bereitstellen mindestens einer Flüssigkomponente,
- gegebenenfalls Bereitstellen mindestens eines Rheologieadditivs,
- Einführen von dem mindestens einen Dispergieradditiv (13), der mindestens einen Pigment- und/oder Füllstoffkomponente und der mindestens einen Flüssigkomponente sowie gegebenenfalls des mindestens einen Rheologieadditivs in einen Doppelschneckenextruder, insbesondere eine Vorrichtung nach einem der vorangehenden Ansprüche, wobei das mindestens eine Dispergieradditiv (13) und die mindestens eine Flüssigkomponente sowie gegebenenfalls das mindestens eine Rheologieadditiv förderstromaufwärts oder förderstromabwärts in Relation zu der Pigment- und/oder Füllstoffkomponente im Bereich einer Förderzone eingeführt werden,
- Vermengen des mindestens einen Dispergieradditivs (13), der mindestens einen Pigment- und/oder Füllstoffkomponente und der mindestens einen Flüssigkomponente sowie gegebenenfalls des mindestens einen Rheologieadditivs in einer dispersiv mischenden Knetzone des Doppelschneckenextruders förderstromabwärts der Förderzone unter Ausbildung und Förderung einer Pigment- und/oder Füllstoffdispersion (15), und
- Abgeben der Pigment- und/oder Füllstoffdispersion (15) am Endbereich (29) des Doppelschneckenextruders (2).

10. Verfahren nach Anspruch 9, **dadurch gekennzeichnet, dass** das mindestens eine Dispergieradditiv (13) beim Bereitstellen oder beim Einführen mindestens ein Netzmittel und/oder mindestens ein Dispergiermittel umfasst und/oder dass das mindestens eine Rheologieadditiv mindestens einen Verdicker umfasst.

11. Verfahren nach Anspruch 10, **dadurch gekennzeichnet, dass** das mindestens eine Dispergieradditiv (13), bezogen auf die Förderrate, Netz- und/oder Dispiermittel in einem Bereich von 1 bis 6 %, vorzugsweise 2 bis 5 %, besonders bevorzugt 3 bis 4 %, umfasst und/oder dass das mindestens eine Rheologieadditiv, bezogen auf die Förderrate, Verdicker in einem Bereich von 3 bis 8 %, vorzugsweise 4 bis 6 %, besonders bevorzugt 3 bis 4 %, umfasst.

12. Verfahren nach einem der Ansprüche 9 bis 11, **dadurch gekennzeichnet, dass** das mindestens eine Dispergieradditiv in flüssiger Form, insbesondere in Form einer Lösung oder in Form einer Suspension, in den Doppelschneckenextruder eingeführt wird und/oder dass die mindestens eine Pigment- und/oder Füllstoffkomponente in fester Form, insbesondere pulverförmig, in den Doppelschneckenextruder eingeführt wird.

13. Verfahren nach einem der Ansprüche 9 bis 12, **dadurch gekennzeichnet, dass** der Doppelschneckenextruder insbesondere kontinuierlich mit einer Schneckendrehzahl im Bereich von 900 U/min bis 1400 U/min, bevorzugt im Bereich von 1000 U/min bis 1300 U/min und besonders bevorzugt im Bereich von 1100 U/min bis 1250 U/Min betrieben wird.

14. Verfahren nach einem der Ansprüche 9 bis 13, **gekennzeichnet durch**
- Bereitstellen eines Bindemittels und/oder mindestens ein weiteren Additivs;
- Einführen des mindestens einen Bindemittels und/oder des mindestens einen weiteren Additivs sowie gegebenenfalls des mindestens einen Rheologieadditivs; und
- Vermengen des mindestens einen Dispergieradditivs (13), der mindestens einen Pigment- und/oder Füllstoffkomponente und der mindestens einen Flüssigkomponente sowie des mindestens einen Bindemittels und/oder des mindestens einen weiteren Additivs sowie gegebenenfalls des mindestens einen Rheologieadditivs.

15. Verfahren nach Anspruch 14, **dadurch gekennzeichnet, dass** das mindestens eine Bindemittel (14), bezogen auf die Förderrate, in einem Bereich von 4 bis 25 %, vorzugsweise 6 bis 18 %, besonders bevorzugt 9 bis 14 %, bereitgestellt wird.

16. Verfahren nach einem der Ansprüche 14 oder 15, **dadurch gekennzeichnet, dass** das mindestens eine Bindemittel (14) in Relation zu der mindestens einen Pigment- und/oder Füllstoffkomponente und/oder in Relation zu der mindestens eine Flüssigkomponente förderstromabwärts in den Doppelschneckenextruder eingespeist wird, insbesondere im Bereich einer Förderzone.

17. Verfahren nach einem der vorstehenden Ansprüche, **dadurch gekennzeichnet, dass** der Doppelschneckenextruder insbesondere förderstromaufwärts vor der Einspeisung des mindestens einen Bindemittels (14) den Doppelschneckenextruder mindestens abschnittsweise in einem Heizabschnitt erwärmt wird, vorzugsweise unter Verwendung der Scherwärme des Extruders und/oder, insbesondere und, einer Zusatzheizung, insbesondere auf Temperaturen im Bereich von 50 bis 80 °C.

18. Verfahren nach einem der vorstehenden Ansprüche, **dadurch gekennzeichnet, dass** der Doppelschneckenextruder, insbesondere förderstromabwärts des Heizabschnitts und/oder, insbesondere und, förderstromaufwärts der Einspeisung des mindestens einen Bindemittels (14), mindestens abschnittweise in einem Kühlabschnitt gekühlt wird, insbesondere auf Temperaturen im Bereich von 15 bis 30 °C.

19. Verfahren nach einem der Ansprüche 9 bis 18, **dadurch gekennzeichnet, dass** dem Doppelschneckenextruder (2) wenigstens 1 %, insbesondere wenigstens 5 %, und höchstens 75 %, insbesondere höchstens 30 % einer ersten Pigment- und/oder Füllstoffkomponente, bezogen auf die Förderrate, zugeführt werden,
wobei insbesondere dem Doppelschneckenextruder (2) wenigstens 0,01 %, insbesondere wenigstens 0,1 %, und höchstens 10 %, insbesondere höchstens 5 % einer zweiten Pigment- und/oder Füllstoffkomponente, bezogen auf die Förderrate zugeführt werden.

20. Verfahren nach einem der Ansprüche 9 bis 19, **dadurch gekennzeichnet, dass** dem Doppelschneckenextruder (2) wenigstens 5 %, insbesondere wenigstens 10 %, und höchstens 90 %, insbesondere höchstens 75 % einer ersten Flüssigkomponente bezogen auf die Förderrate zugeführt werden,
wobei insbesondere dem Doppelschneckenextruder (2) wenigstens 5 %, insbesondere wenigstens 10 %, und höchstens 70 %, insbesondere höchstens 50 % einer zweiten Flüssigkomponente bezogen auf die Förderrate, zugeführt werden, wobei insbesondere dem Doppelschneckenextruder (2) wenigstens 0,1 %, insbesondere wenigstens 0,5 %, und höchstens 15 %, insbesondere höchstens 10 % einer dritten Flüssigkomponente bezogen auf die Förderrate zugeführt werden.

21. Verfahren nach einem der Ansprüche 9 bis 20, **dadurch gekennzeichnet, dass** es keinen Entgasungs- oder Evakuierungsschritt, insbesondere keinen Entgasungs- und Evakuierungsschritt, umfasst.

22. Verfahren nach einem der Ansprüche 9 bis 21, **dadurch gekennzeichnet, dass** in derselben Förderzone wie das Dispergieradditiv und die Flüssigkomponente ein Entschäumer eingespeist wird, vorzugsweise, bezogen auf die Förderrate, in einem Bereich von 0,05 bis 1 %, vorzugsweise 0,1 bis 0,5 %, besonders bevorzugt 0,2 bis 0,4%.

23. Verfahren nach einem der Ansprüche 9 bis 22, **dadurch gekennzeichnet, dass** im Endbereich (29) des Doppelschneckenextruders (2) das mindestens eine Bindemittel (14) als Feststoffkomponente oder als flüssige Komponente eingespeist wird, vorzugsweise, bezogen auf die Förderrate, in einem Bereich von 4 bis 25 %, vorzugsweise 6 bis 18 %, besonders bevorzugt 9 bis 14 %, bereitgestellt wird.

24. Verfahren nach einem der Ansprüche 9 bis 23, **dadurch gekennzeichnet, dass** im Endbereich (29) des Doppelschneckenextruders (2) ein Konservierungsmittel eingespeist wird, vorzugsweise, bezogen auf die Förderrate, in einem Bereich von 0,05 bis 0,5 %, vorzugsweise 0,1 bis 0,4 %, besonders bevorzugt 0,2 bis 0,3 %, bereitgestellt wird.

25. Verfahren nach einem der Ansprüche 9 bis 24, **dadurch gekennzeichnet, dass** entlang des Doppelschneckenextruders mehrfach alternierend Förderzonen und dispersiv mischende Knetzonen durchlaufen werden.

26. Verwendung der Vorrichtung (1) gemäß einem der Ansprüche 1 bis 8 für die Herstellung einer Pigment- und/oder Füllstoffdispersion, insbesondere einer Dispersionsfarbe, einer Farb- oder Füllstoffpaste, insbesondere Rußpaste, oder eines lösungsmittelhaltigen oder wässrigen Lacks.
